# EUROPEAN PATENT SPECIFICATION

(11) **EP 4 436 268 B1**
(45) Date of publication and mention of the grant of the patent: **08.07.2026**
(21) Application number: 22913391.3
(22) Date of filing: 15.08.2022
(51) Int. Cl.: H04W 52/02, H04W 74/00

(54) **DATA TRANSMISSION METHOD AND COMMUNICATION DEVICE**
DATENÜBERTRAGUNGSVERFAHREN UND KOMMUNIKATIONSVORRICHTUNG
PROCÉDÉ DE TRANSMISSION DE DONNÉES ET DISPOSITIF DE COMMUNICATION

(30) Priority: 27.12.2021 CN 202111613370
(43) Date of publication of application: 25.09.2024
(73) Proprietor: Nokia Technologies Oy, 02610 Espoo (FI)
(72) Inventor: LIN, Yousi, Shenzhen, Guangdong 518129 (CN); GAN, Ming, Shenzhen, Guangdong 518129 (CN); LI, Yiqing, Shenzhen, Guangdong 518129 (CN); LI, Yunbo, Shenzhen, Guangdong 518129 (CN)
(74) Representative: Richardt Patentanwälte PartG mbB
(86) International application number: PCT/CN2022/112440
(87) International publication number: WO 2023/124105

(56) References cited:
- EP-A1- 4 302 540
- CN-A- 105 850 191
- CN-A- 107 517 502
- CN-A- 107 517 502
- CN-A- 107 979 866
- CN-A- 108 377 535
- US-A1- 2020 267 644

## Description

### TECHNICAL FIELD

Embodiments of this application relate to the field of communication technologies, and more specifically, to a data transmission method and a communication apparatus.

### BACKGROUND

Wi-Fi 6 defines a power-saving technology based on a target wake time (target wake time, TWT). A station (station, STA) sets up a TWT with an access point (access point, AP) to determine an active time period and a sleep time period of the STA, thereby implementing power saving.

Based on the foregoing TWT mechanism, the 802.11be protocol defines a new restricted TWT (restricted TWT, r-TWT) for low-latency traffic. In the r-TWT mechanism, a traffic identifier (traffic identifier, TID) of low-latency traffic of an STA is determined through separate negotiation between the STA and an AP. In this case, different TIDs may be allocated to the same type of low-latency traffic of different STAs. Consequently, when the STA accesses a channel by using enhanced distributed channel access (enhanced distributed channel access, EDCA), an access category (access category, AC) with a low priority may be allocated to some low-latency traffic. As a result, a requirement of low-latency transmission of the traffic cannot be ensured.

Therefore, how to better meet a transmission requirement of low-latency traffic of an STA in the r-TWT mechanism is a technical problem that urgently needs to be resolved currently.

Document EP4302540A1 relates to methods for low-latency communications in wireless networks. A wireless STA transmits a data session request to a root AP in a wireless network responsive to activating an application associated with latency restricted (LR) data traffic. The data session request indicates a desired channel access category (CA) associated with the LR data traffic.

### SUMMARY

Embodiments of this application provide a data transmission method and a communication apparatus, to better meet a low-latency transmission requirement of low-latency traffic of an STA in an r-TWT mechanism. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

According to a first aspect, a data transmission method is provided, including: An access point receives restricted target wake time setup request information sent by a station. The restricted target wake time setup request information is used to request to set up a restricted target wake time. The access point sends restricted target wake time response information to the station. The restricted target wake time response information is used to respond to the restricted target wake time setup request information. The restricted target wake time setup request information or the restricted target wake time response information includes indication information of a first access category corresponding to low-latency traffic of the station.

The station carries indication information of a first AC in the setup request information. This embodiment of this application allows the station to independently determine and choose whether to change an AC corresponding to the low-latency traffic, so that an appropriate AC can be more flexibly allocated to low-latency traffic. Further, this can effectively resolve a problem that a default AC of some low-latency traffic cannot meet a low-latency requirement of the low-latency traffic due to a default mapping relationship between a user priority (UP) and the AC, and therefore better ensure that a transmission requirement of low-latency traffic of a station in an r-TWT mechanism is met.

The access point independently determines whether to allocate a new AC to the low-latency traffic of the station. This embodiment of this application allows the access point to independently determine, so that an appropriate AC can be more flexibly allocated to the low-latency traffic. Further, this can effectively resolve the problem that a default AC of some low-latency traffic cannot meet the low-latency requirement of the low-latency traffic due to the default mapping relationship between the UP and the AC, and therefore better ensure that the transmission requirement of the low-latency traffic of the station in the r-TWT mechanism is met.

The station or the access point flexibly configures a new AC for the low-latency traffic. This embodiment of this application is flexible because limitation caused when the AC corresponding to the low-latency traffic is configured based on Table 3 is eliminated. In addition, in this embodiment of this application, the station or the access point can independently and selectively configure the AC for the low-latency traffic. Therefore, in this embodiment of this application, based on the foregoing technical solution, an AC corresponding to the low-latency traffic of the STA can be flexibly configured. In this way, a low-latency transmission requirement of the low-latency traffic of the STA in the r-TWT mechanism can be better met.

With reference to the first aspect, in some possible implementations of the first aspect, the restricted target wake time response information includes first indication information. When the first indication information is a first value, the first value indicates that the restricted target wake time response information includes the indication information of the first access category. Alternatively, when the first indication information is a second value, the second value indicates that the restricted target wake time response information does not include the indication information of the first access category.

In this embodiment of this application, the indication information indicates whether the response information sent by the access point to the station includes the indication information of the first AC or whether the indication information of the first AC included in the response information is valid, to better help the station determine whether the access point changes the AC corresponding to the low-latency traffic of the station.

With reference to the first aspect, in some possible implementations of the first aspect, the restricted target wake time setup request information includes second indication information. When the second indication information is a first value, the first value indicates that the restricted target wake time setup request information includes the indication information of the first access category. Alternatively, when the second indication information is a second value, the second value indicates that the restricted target wake time setup request information does not include the indication information of the first access category.

In this embodiment of this application, the indication information indicates whether the setup request information sent by the station to the access point includes the indication information of the first AC or whether the indication information that is of the first AC and that is included in the response information is valid, to better help the access point determine whether the station requests to change the AC corresponding to the low-latency traffic.

With reference to the first aspect, in some possible implementations of the first aspect, when the restricted target wake time setup request information includes the indication information of the first access category, the restricted target wake time response information includes third indication information. When the third indication information is a first value, the first value indicates that the access point agrees on the indication information of the first access category. Alternatively, when the third indication information is a second value, the second value indicates that the access point rejects the indication information of the first access category.

In this embodiment of this application, the access point performs determining on the indication information that is of the first AC corresponding to the low-latency traffic of the station and that is included in the setup request information sent by the station, and determines whether to agree on the first AC or reject the first AC. In this way, in this embodiment of this application, the station is provided with a right of independently determining and selecting the first AC corresponding to the low-latency traffic of the station, and an appropriate AC can be allocated to the low-latency traffic more flexibly, to better ensure that the transmission requirement of the low-latency traffic is met. In this manner, limitation caused when the AC corresponding to the low-latency traffic is configured based on Table 3 can be eliminated in this embodiment of this application.

With reference to the first aspect, in some possible implementations of the first aspect, the second value further indicates that the restricted target wake time response information further includes indication information of a second access category corresponding to the low-latency traffic of the station.

With reference to the first aspect, in some possible implementations of the first aspect, when the restricted target wake time setup request information includes the indication information of the first access category, the restricted target wake time response information includes fourth indication information. When the fourth indication information is a first value, the first value indicates that the access point agrees on the indication information of the first access category. Alternatively, when the fourth indication information is a second value, the second value indicates that the access point rejects the indication information of the first access category. Alternatively, when the fourth indication information is a third value, the third value indicates that the restricted target wake time response information further includes indication information of a third access category corresponding to the low-latency traffic of the station.

In this embodiment of this application, the access point performs determining on the indication information that is of the first AC corresponding to the low-latency traffic of the station and that is included in the setup request information sent by the station, and determines whether to agree on the first AC or reject the first AC. In this way, in this embodiment of this application, the station is provided with a right of independently determining and selecting the first AC corresponding to the low-latency traffic of the station, and an appropriate AC can be more flexibly allocated to the low-latency traffic, to better ensure that the transmission requirement of the low-latency traffic is met. In this manner, limitation caused when the AC corresponding to the low-latency traffic is configured based on Table 3 can be eliminated in this embodiment of this application.

With reference to the first aspect, in some possible implementations of the first aspect, the restricted target wake time setup request information or the restricted target wake time response information includes restricted target wake time traffic information. The restricted target wake time traffic information includes an access category field, and the access category field is used to carry the indication information of the first access category.

With reference to the first aspect, in some possible implementations of the first aspect, the restricted target wake time traffic information further includes a traffic information control field, the traffic information control field is located before the access category field, and the traffic information control field is used to carry one of the following information: the first indication information, the second indication information, the third indication information, or the fourth indication information.

With reference to the first aspect, in some possible implementations of the first aspect, the indication information of the first access category is an access category index value or a bitmap.

According to a second aspect, a data transmission method is provided, including: A station sends restricted target wake time setup request information to an access point. The restricted target wake time setup request information is used to request to set up a restricted target wake time. The station receives restricted target wake time response information sent by the access point. The restricted target wake time response information is used to respond to the restricted target wake time setup request information. The restricted target wake time setup request information or the restricted target wake time response information includes indication information of a first access category corresponding to low-latency traffic of the station.

With reference to the second aspect, in some possible implementations of the second aspect, the restricted target wake time response information includes first indication information. When the first indication information is a first value, the first value indicates that the restricted target wake time response information includes the indication information of the first access category. Alternatively, when the first indication information is a second value, the second value indicates that the restricted target wake time response information does not include the indication information of the first access category.

With reference to the second aspect, in some possible implementations of the second aspect, the restricted target wake time setup request information includes second indication information. When the second indication information is a first value, the first value indicates that the restricted target wake time setup request information includes the indication information of the first access category. Alternatively, when the second indication information is a second value, the second value indicates that the restricted target wake time setup request information does not include the indication information of the first access category.

With reference to the second aspect, in some possible implementations of the second aspect, when the restricted target wake time setup request information includes the indication information of the first access category, the restricted target wake time response information includes third indication information. When the third indication information is a first value, the first value indicates that the access point agrees on the indication information of the first access category. Alternatively, when the third indication information is a second value, the second value indicates that the access point rejects the indication information of the first access category.

With reference to the second aspect, in some possible implementations of the second aspect, the second value further indicates that the restricted target wake time response information further includes indication information of a second access category corresponding to the low-latency traffic of the station.

With reference to the second aspect, in some possible implementations of the second aspect, when the restricted target wake time setup request information includes the indication information of the first access category, the restricted target wake time response information includes fourth indication information. When the fourth indication information is a first value, the first value indicates that the access point agrees on the indication information of the first access category. Alternatively, when the fourth indication information is a second value, the second value indicates that the access point rejects the indication information of the first access category. Alternatively, when the fourth indication information is a third value, the third value indicates that the restricted target wake time response information further includes indication information of a third access category corresponding to the low-latency traffic of the station.

With reference to the second aspect, in some possible implementations of the second aspect, the restricted target wake time setup request information or the restricted target wake time response information includes restricted target wake time traffic information. The restricted target wake time traffic information includes an access category field, and the access category field is used to carry the indication information of the first access category.

With reference to the second aspect, in some possible implementations of the second aspect, the restricted target wake time traffic information further includes a traffic information control field, the traffic information control field is located before the access category field, and the traffic information control field is used to carry one of the following information: the first indication information, the second indication information, the third indication information, or the fourth indication information.

With reference to the second aspect, in some possible implementations of the second aspect, the indication information of the first access category is an access category index value or a bitmap.

According to a third aspect, a communication apparatus is provided, including: a transceiver unit, configured to receive restricted target wake time setup request information sent by a station. The restricted target wake time setup request information is used to request to set up a restricted target wake time. The transceiver unit is further configured to send restricted target wake time response information to the station. The restricted target wake time response information is used to respond to the restricted target wake time setup request information. The restricted target wake time setup request information or the restricted target wake time response information includes indication information of a first access category corresponding to low-latency traffic of the station.

With reference to the third aspect, in some possible implementations of the third aspect, the restricted target wake time response information includes first indication information. When the first indication information is a first value, the first value indicates that the restricted target wake time response information includes the indication information of the first access category. Alternatively, when the first indication information is a second value, the second value indicates that the restricted target wake time response information does not include the indication information of the first access category.

With reference to the third aspect, in some possible implementations of the third aspect, the restricted target wake time setup request information includes second indication information. When the second indication information is a first value, the first value indicates that the restricted target wake time setup request information includes the indication information of the first access category. Alternatively, when the second indication information is a second value, the second value indicates that the restricted target wake time setup request information does not include the indication information of the first access category.

With reference to the third aspect, in some possible implementations of the third aspect, when the restricted target wake time setup request information includes the indication information of the first access category, the restricted target wake time response information includes third indication information. When the third indication information is a first value, the first value indicates that the access point agrees on the indication information of the first access category. Alternatively, when the third indication information is a second value, the second value indicates that the access point rejects the indication information of the first access category.

With reference to the third aspect, in some possible implementations of the third aspect, the second value further indicates that the restricted target wake time response information further includes indication information of a second access category corresponding to the low-latency traffic of the station.

With reference to the third aspect, in some possible implementations of the third aspect, when the restricted target wake time setup request information includes the indication information of the first access category, the restricted target wake time response information includes fourth indication information. When the fourth indication information is a first value, the first value indicates that the access point agrees on the indication information of the first access category. Alternatively, when the fourth indication information is a second value, the second value indicates that the access point rejects the indication information of the first access category. Alternatively, when the fourth indication information is a third value, the third value indicates that the restricted target wake time response information further includes indication information of a third access category corresponding to the low-latency traffic of the station.

With reference to the third aspect, in some possible implementations of the third aspect, the restricted target wake time setup request information or the restricted target wake time response information includes restricted target wake time traffic information. The restricted target wake time traffic information includes an access category field, and the access category field is used to carry the indication information of the first access category.

With reference to the third aspect, in some possible implementations of the third aspect, the restricted target wake time traffic information further includes a traffic information control field, the traffic information control field is located before the access category field, and the traffic information control field is used to carry one of the following information: the first indication information, the second indication information, the third indication information, or the fourth indication information.

With reference to the third aspect, in some possible implementations of the third aspect, the indication information of the first access category is an access category index value or a bitmap.

According to a fourth aspect, a communication apparatus is provided, including: a transceiver unit, configured to send restricted target wake time setup request information to an access point. The restricted target wake time setup request information is used to request to set up a restricted target wake time. The transceiver unit is further configured to receive restricted target wake time response information sent by the access point. The restricted target wake time response information is used to respond to the restricted target wake time setup request information. The restricted target wake time setup request information or the restricted target wake time response information includes indication information of a first access category corresponding to low-latency traffic of the station.

With reference to the fourth aspect, in some possible implementations of the fourth aspect, the restricted target wake time response information includes first indication information. When the first indication information is a first value, the first value indicates that the restricted target wake time response information includes the indication information of the first access category. Alternatively, when the first indication information is a second value, the second value indicates that the restricted target wake time response information does not include the indication information of the first access category.

With reference to the fourth aspect, in some possible implementations of the fourth aspect, the restricted target wake time setup request information includes second indication information. When the second indication information is a first value, the first value indicates that the restricted target wake time setup request information includes the indication information of the first access category. Alternatively, when the second indication information is a second value, the second value indicates that the restricted target wake time setup request information does not include the indication information of the first access category.

With reference to the fourth aspect, in some possible implementations of the fourth aspect, when the restricted target wake time setup request information includes the indication information of the first access category, the restricted target wake time response information includes third indication information. When the third indication information is a first value, the first value indicates that the access point agrees on the indication information of the first access category. Alternatively, when the third indication information is a second value, the second value indicates that the access point rejects the indication information of the first access category.

With reference to the fourth aspect, in some possible implementations of the fourth aspect, the second value further indicates that the restricted target wake time response information further includes indication information of a second access category corresponding to the low-latency traffic of the station.

With reference to the fourth aspect, in some possible implementations of the fourth aspect, when the restricted target wake time setup request information includes the indication information of the first access category, the restricted target wake time response information includes fourth indication information. When the fourth indication information is a first value, the first value indicates that the access point agrees on the indication information of the first access category. Alternatively, when the fourth indication information is a second value, the second value indicates that the access point rejects the indication information of the first access category. Alternatively, when the fourth indication information is a third value, the third value indicates that the restricted target wake time response information further includes indication information of a third access category corresponding to the low-latency traffic of the station.

With reference to the fourth aspect, in some possible implementations of the fourth aspect, the restricted target wake time setup request information or the restricted target wake time response information includes restricted target wake time traffic information. The restricted target wake time traffic information includes an access category field, and the access category field is used to carry the indication information of the first access category.

With reference to the fourth aspect, in some possible implementations of the fourth aspect, the restricted target wake time traffic information further includes a traffic information control field, the traffic information control field is located before the access category field, and the traffic information control field is used to carry one of the following information: the first indication information, the second indication information, the third indication information, or the fourth indication information.

With reference to the fourth aspect, in some possible implementations of the fourth aspect, the indication information of the first access category is an access category index value or a bitmap.

According to a fifth aspect, a computer-readable storage medium is provided. The computer storage medium stores program instructions, and when the program instructions are executed by a computer, the computer is enabled to perform the method according to any one of the first aspect and the possible implementations of the first aspect or any one of the second aspect and the possible implementations of the second aspect.

According to a sixth aspect, a computer program product is provided, including instructions. When the instructions are run on a computer, the computer is enabled to perform the method according to any one of the first aspect and the possible implementations of the first aspect or any one of the second aspect and the possible implementations of the second aspect.

### BRIEF DESCRIPTION OF DRAWINGS

FIG. 1 is a diagram of an application scenario according to an embodiment of this application;
FIG. 2 is a schematic flowchart of a data transmission method according to an embodiment of this application;
FIG. 3 is a diagram of a structure of a broadcast target wake time parameter setting field format according to an embodiment of this application;
FIG. 4 is a schematic flowchart of another data transmission method according to an embodiment of this application;
FIG. 5 is a diagram of a frame structure of restricted target wake time traffic information according to an embodiment of this application;
FIG. 6 is a schematic flowchart of still another data transmission method according to an embodiment of this application;
FIG. 7 is a diagram of another frame structure of restricted target wake time traffic information according to an embodiment of this application;
FIG. 8 is a diagram of yet another frame structure of restricted target wake time traffic information according to an embodiment of this application;
FIG. 9 is a block diagram of a communication apparatus according to an embodiment of this application; and
FIG. 10 is a block diagram of another communication apparatus according to an embodiment of this application.

### DESCRIPTION OF EMBODIMENTS

The following describes technical solutions of this application with reference to the accompanying drawings.

The technical solutions provided in embodiments of this application are applicable to a wireless local area network (wireless local area network, WLAN) scenario. For example, the technical solutions are applicable to an IEEE 802.11 system standard, for example, the 802.11a/b/g standard, the 802.11n standard, the 802.11ac standard, the 802.11ax standard, or a next-generation standard, for example, the 802.11be standard or a further next-generation standard.

Although embodiments of this application are mainly described by using an example in which a WLAN network is deployed, especially a network to which the IEEE 802.11 system standard is applied, a person skilled in the art easily understands that various aspects in embodiments of this application may be extended to other networks that use various standards or protocols, for example, Bluetooth (Bluetooth), a high performance radio local area network (high performance radio local area network, HIPERLAN), a wide area network (wide area network, WAN), a personal area network (personal area network, PAN), and other networks that are known or developed in the future. Therefore, regardless of a used coverage area and a used wireless access protocol, the various aspects provided in embodiments of this application are applicable to any appropriate wireless network. The technical solutions in embodiments of this application may be further applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, and a wireless local area network system such as an internet of things (internet of things, IoT) network or vehicle-to-everything (vehicle-to-X, V2X).

The foregoing communication systems to which this application is applicable are merely examples for description, and communication systems to which this application is applicable are not limited thereto. A unified description is provided herein, and details are not described below again.

A terminal in embodiments of this application may be user equipment (user equipment, UE), an access terminal, a subscriber unit, a subscriber station, a mobile station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future 6G network, a terminal in a public land mobile network (public land mobile network, PLMN), or the like. This is not limited in embodiments of this application.

A network device in embodiments of this application may be a device configured to communicate with the terminal. The network device may be a base transceiver station (base transceiver station, BTS) in the global system for mobile communication (global system for mobile communication, GSM) or the code division multiple access (code division multiple access, CDMA) system, or may be a NodeB (NodeB, NB) in the wideband code division multiple access (wideband code division multiple access, WCDMA) system, or may be an evolved NodeB (evolved NodeB, eNB or eNodeB) in the LTE system, or may be a radio controller in a scenario of a cloud radio access network (cloud radio access network, CRAN). Alternatively, the network device may be a relay station, an access point, a vehicle-mounted device, a wearable device, a network device in the 5G network, a network device in the future 6G network, a network device in the PLMN network, or the like. This is not limited in embodiments of this application.

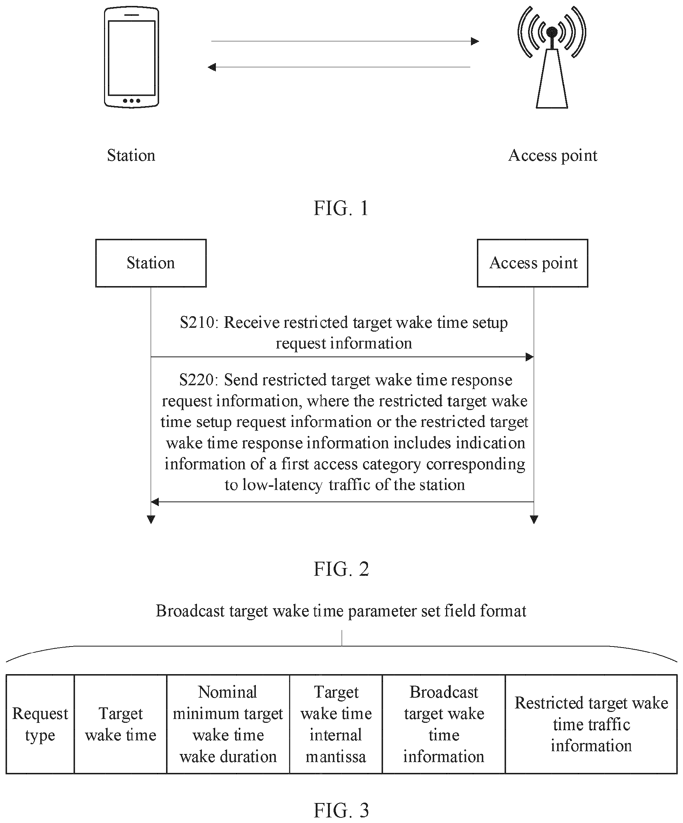

FIG. 1 is a diagram of an application scenario according to this application. In FIG. 1, an access point (access point, AP) may be a communication server, a router, or a switch, or may be any one of the foregoing network devices. A station (station, STA) may be a mobile phone or a computer, or may be any one of the foregoing terminals. This is not limited in embodiments of this application.

It should be understood that the technical solutions in embodiments of this application are applicable to communication between an AP and one or more STAs, are applicable to mutual communication between APs, and are applicable to mutual communication between STAs. For ease of description, embodiments of this application are described merely by using an example in which an AP communicates with one or more STAs. However, this description manner does not have any limitation on an actual application scope of the technical solutions of embodiments of this application. A unified description is provided herein and details are not described below again.

The access point may be an access point used by a terminal (such as a mobile phone) to access a wired (or wireless) network, and is mainly deployed at home, in a building, and in a campus. A typical coverage radius is tens of meters to hundreds of meters. Certainly, the access point may alternatively be deployed outdoors. The access point is equivalent to a bridge that connects a wired network and a wireless network. A main function of the access point is to connect various clients of a wireless network together and then connect the wireless network to an Ethernet. Specifically, the access point may be a terminal (such as a mobile phone) or a network device (such as a router) with a Wi-Fi chip. The access point may be a device supporting the 802.11be standard. Alternatively, the access point may be a device that supports a plurality of WLAN standards of the 802.11 family, such as 802.11ax, 802.11ac, 802.11n, 802.11g, 802.11b, 802.11a, and a next generation of 802.11be. The access point in this application may be an HE AP or an EHT AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support WLAN standards of the 802.11 family, such as 802.11ax, 802.11ac, 802.11n, 802.11g, 802.11b, 802.11a, and the next generation of 802.11be.

For example, the access point and the station may be devices used in vehicle-to-everything, internet of things nodes, sensors, or the like in an internet of things (internet of things, IoT), smart cameras, smart remote controls, smart water or electricity meters, or the like in a smart home, sensors in a smart city, and the like.

It should be understood that the technical solutions in embodiments of this application are applicable to communication between an AP and one or more STAs, are applicable to mutual communication between APs, and are applicable to mutual communication between STAs. For ease of description, embodiments of this application are described merely by using an example in which an AP communicates with one or more STAs. However, this description manner does not have any limitation on an actual application scope of the technical solutions of embodiments of this application. A unified description is provided herein and details are not described below again.

A wireless communication system provided in embodiments of this application may be a WLAN or a cellular network. The method may be implemented by a communication device in the wireless communication system or a chip or a processor in the communication device. The communication device may be a wireless communication device that supports parallel transmission on a plurality of links. For example, the communication device is referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may work on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or an STA multi-link device (STA multi-link device).

To better understand the technical solutions disclosed in embodiments of this application, the following briefly describes some technical terms in embodiments of this application.

First, a target wake time (target wake time, TWT) is described.

The TWT is a technology defined by Wi-Fi 6 for power saving. By setting some cyclical time periods, the TWT enables some devices to keep active only in these TWT service periods (TWT service periods, TWT SP) and to sleep in other time periods, thereby saving power.

TWTs are classified into individual TWTs and broadcast TWTs. In an individual TWT, each STA may separately set up a TWT protocol with the AP. Therefore, each STA may have an active time period and a sleep time period of the STA. In a broadcast TWT, the AP may set up a public TWT protocol for a group of STAs, and the plurality of STAs work in a same active time period and sleep in another time period.

Specifically, the individual TWT means that a TWT requesting station (TWT requesting STA) sends a TWT request message to a TWT responding station (TWT responding STA), requesting to set up a wake time; after receiving the TWT request message, the responding station sends a TWT response message to the requesting station; and after the interaction succeeds, a TWT protocol is set up between the requesting station and the responding station. After the TWT protocol is reached, both the requesting station and the responding station should remain in an active state within an agreed time period, to send and receive data. Beyond the foregoing time period, the station may sleep to achieve power saving.

Generally, the STA is a requesting station, the AP is a responding station, and the AP may also initiate a TWT protocol setup request to the STA.

Different from the individual TWT, the broadcast TWT provides a "batch management" mechanism. An AP can set up a series of cyclical TWT service periods with a plurality of STAs. In the TWT service period, the plurality of STAs need to keep in an active state, so as to communicate with the AP.

The AP may carry information about one or more broadcast TWTs in a beacon frame (beacon frame), and each broadcast TWT is jointly represented by a broadcast TWT identifier and a media access control (media access control, MAC) address of the AP. After receiving the beacon frame, if the STA intends to join the broadcast TWT, the STA may send a broadcast TWT setup request message to the AP, to join the broadcast TWT. During setup of the broadcast TWT, the STA needs to specify a broadcast TWT identifier to request to join a specific broadcast TWT. After joining the broadcast TWT, the STA may be woken up based on a TWT service period indicated by a TWT parameter set, to communicate with the AP. It should be noted that, if the STA supports the broadcast TWT, but does not explicitly join a broadcast TWT ID, the STA participates in the broadcast TWT of the broadcast TWT ID=0 by default.

Similar to that of the individual TWT, the parameter set of the broadcast TWT also specifies a cycle at which TWT service periods appear and a duration of each TWT service period. In addition, a broadcast TWT parameter further includes a life cycle of the broadcast TWT. The life cycle is in a unit of a beacon frame interval, and indicates a duration of a setup broadcast TWT.

Based on the foregoing TWT mechanism, the 802.11be protocol defines a new broadcast TWT for low-latency traffic transmission, which is called a restricted TWT (r-TWT). Specifically, the AP sets a broadcast TWT recommendation field to 4, to indicate that the broadcast TWT is an r-TWT. Because a previous extreme high throughput station (previous extreme high throughput station, Pre-EHT STA) or a legacy station (legacy STA) does not recognize the value (that is, 4), the station does not attempt to join the broadcast TWT, but remains silent during the r-TWT, and does not initiate channel access.

Second, a traffic identifier (traffic identifier, TID) is described.

The TID indicates a priority corresponding to traffic of an STA, and a length of the TID is 4 bits, and corresponds to 16 values, which are 0 to 15 respectively. In an enhanced distributed channel access (enhanced distributed channel access, EDCA) scenario, a value range of the TID is 0 to 7, and the value corresponds to a user priority (user priority, UP) of the STA, and the remaining 8 to 15 are reserved values. A value of the UP is associated with a media access control (media access control, MAC) service data unit (MAC service data unit, MSDU), and indicates a priority order of processing MSDUs.

Third, an access category (access category, AC) is described.

802.11 series protocols define four access categories. Each access category defines parameters such as any frame interval, a transmission time limit, and a contention window size. These parameters determine a priority of an STA when the STA accesses a channel. For details, refer to Table 1.

**Table 1: Parameters corresponding to each access category**

| Access category | Minimum contention window Cwmin (Slots) | Maximum contention window Cwmax (Slots) | Any frame interval AIFSN (Slots) | Transmission time limit TXOP limit (ms) |
|---|---|---|---|---|
| AC_BK | 31 | 1023 | 7 | 0 |
| AC_BE | 31 | 1023 | 3 | 0 |
| AC_VI | 15 | 31 | 2 | 3.008 ms |
| AC_VO | 7 | 15 | 2 | 1.504 ms |
| Legacy (legacy) | 15 | 1023 | 2 | 0 |

Fourth, an access category index (access category index, ACI) value is described.

The ACI indicates a referenced AC and all parameters corresponding to the AC. For a mapping relationship between the ACI and the AC, refer to Table 2.

**Table 2: Mapping relationship between the ACI and the AC**

| ACI | AC | Description |
|---|---|---|
| 0 | AC_BE | Best effort |
| 1 | AC_BK | Background |
| 2 | AC_VI | Video |
| 3 | AC_VO | Voice |

Fifth, a mapping relationship between a UP and an AC is described.

It should be understood that the mapping relationship between the UP and the AC is specifically shown in Table 3. Specifically, eight UPs are mapped to four ACs, and each AC supports two UPs.

**Table 3: Mapping relationship between the UP and the AC**

| Priority (Priority) | UP | AC |
|---|---|---|
| Lowest (Lowest) | 1 | AC_BK |
| Highest (Highest) | 2 | AC_BK |
| | 0 | AC_BE |
| | 3 | AC_BE |
| | 4 | AC_VI |
| | 5 | AC_VI |
| | 6 | AC_VO |
| | 7 | AC_VO |

It should be understood that a TID of low-latency traffic of an STA is determined by the STA with an AP associated with the STA through separate negotiation. In this case, a plurality of different TIDs may be configured for the same type of low-latency traffic. For example, a TID corresponding to low-latency traffic #A of an STA #1 is 1, a TID corresponding to low-latency traffic #A of an STA #2 is 7, a TID corresponding to low-latency traffic #A of an STA #3 is 4, and the low-latency traffic #Ais traffic that highly requires low-latency transmission. Because the TIDs of the low-latency traffic of the STA are in a one-to-one correspondence with UPs, the UPs of the traffic can only be mapped to corresponding ACs in a default manner (see Table 3). Therefore, the AC corresponding to the low-latency traffic of the STA is completely determined by the allocated TID. In this case, in a current r-TWT mechanism, if an AC corresponding to low-latency traffic of an STA is configured based on the mapping relationship indicated in Table 3, an AC with a low priority may be allocated to low-latency traffic of some STAs when the STAs access a channel by using EDCA. For example, the TID of the low-latency traffic #A of the STA #1 is 1, and an access category corresponding to the low-latency traffic #A of the STA #1 is AC_BK, therefore, transmission cannot be completed within a latency requirement of the low-latency traffic, and finally transmission performance of low-latency traffic of the r-TWT is reduced.

In view of the foregoing technical problem, embodiments of this application provide a data transmission method. By flexibly configuring an AC corresponding to low-latency traffic of an STA, embodiments of this application can better meet a low-latency transmission requirement of the low-latency traffic of the STA in an r-TWT mechanism.

The following describes the data transmission method according to embodiments of this application with reference to FIG. 2.

FIG. 2 is a schematic flowchart of a data transmission method according to an embodiment of this application. The method includes the following steps.

S210: A station sends restricted target wake time setup request information.

Correspondingly, an access point receives the restricted target wake time setup request information sent by the station.

S220: The access point sends restricted target wake time response information to the station.

Correspondingly, the station receives the restricted target wake time response information sent by the access point.

In the foregoing embodiment, the restricted target wake time setup request information or the restricted target wake time response information includes indication information of a first access category corresponding to low-latency traffic of the station.

In this embodiment of this application, the low-latency traffic is traffic that has a high requirement on a latency. Generally, the low-latency traffic requires a traffic transmission latency to be within 10 ms.

It should be understood that the restricted target wake time setup request information (hereinafter referred to as "setup request information") sent by the station to the access point is used to request to set up a restricted target wake time protocol, and the restricted target wake time response information (hereinafter referred to as "response information") sent by the access point to the station is used to respond to the setup request information. Specific response content is described below.

It should be understood that the indication information that is of the first AC and that is included in the setup request information or the response information may be an ACI, a bitmap, or another implicit form, to indicate the first AC corresponding to the low-latency traffic.

In this embodiment of this application, the setup request information may be a TWT request frame, or may be other information such as a TWT setup frame, a TWT negotiation frame, a TWT initiating frame, or a TWT setup request frame. The response information may be a TWT response frame, or may be other information such as a TWT setup response frame, a TWT setup frame, or a TWT negotiation frame.

FIG. 3 is a diagram of a structure of a broadcast target wake time parameter setting field format according to an embodiment of this application.

The broadcast target wake time parameter setting field format (broadcast TWT parameter set field format) includes the following several bytes: a request type (request type), a target wake time (TWT), a nominal minimum target wake time wake duration (nominal minimum TWT wake duration), a target wake time internal mantissa (TWT internal mantissa), broadcast target wake time information (broadcast TWT information), and restricted target wake time traffic information (restricted TWT traffic information). The request type occupies two bytes, the TWT occupies two bytes, the nominal minimum TWT wake duration occupies one byte, the TWT internal mantissa occupies two bytes, the broadcast TWT information occupies two bytes, and the restricted TWT traffic information occupies three or more bytes. One byte is eight bits.

It should be noted that both the restricted target wake time setup request information and the restricted target wake time response information in this embodiment of this application include the broadcast target wake time parameter setting field format in FIG. 3 or a possible variation thereof, and a specific difference is described below.

For ease of description, an example in which the setup request information is a TWT request frame and the response information is a TWT response frame is used for description in this embodiment of this application. However, this description manner does not limit the protection scope of embodiments of this application.

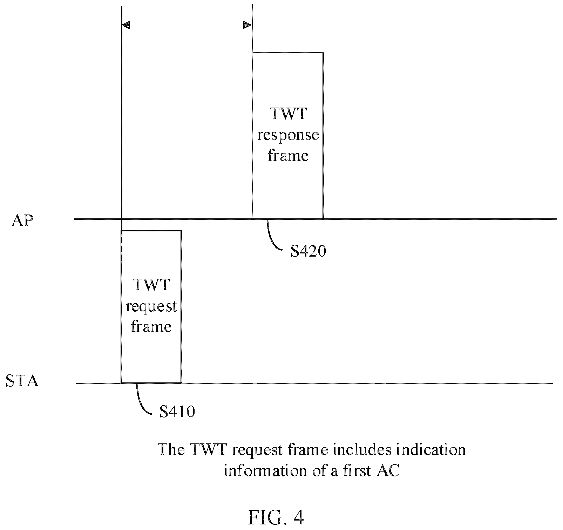

The following further describes the technical solution shown in FIG. 2 with reference to FIG. 4 to FIG. 7.

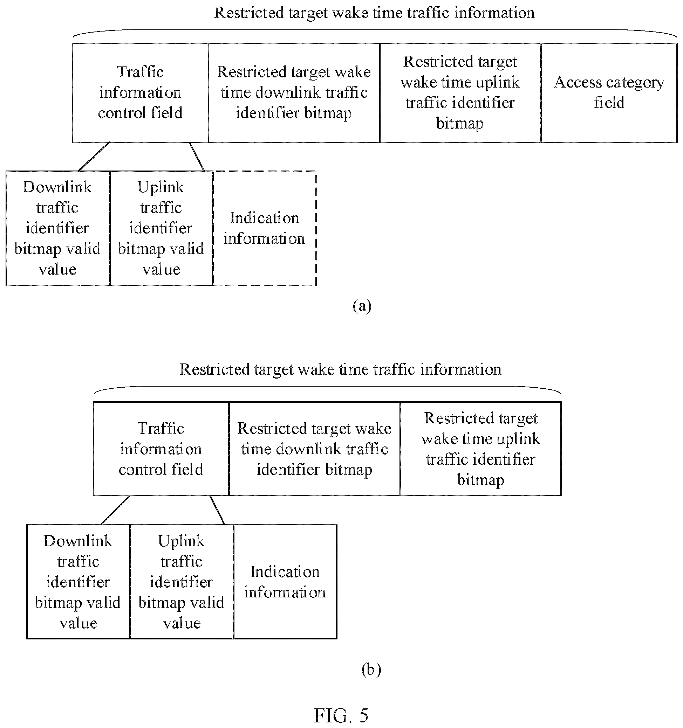

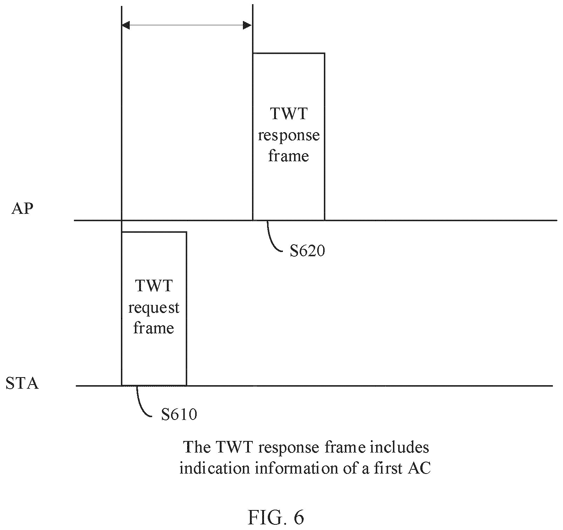

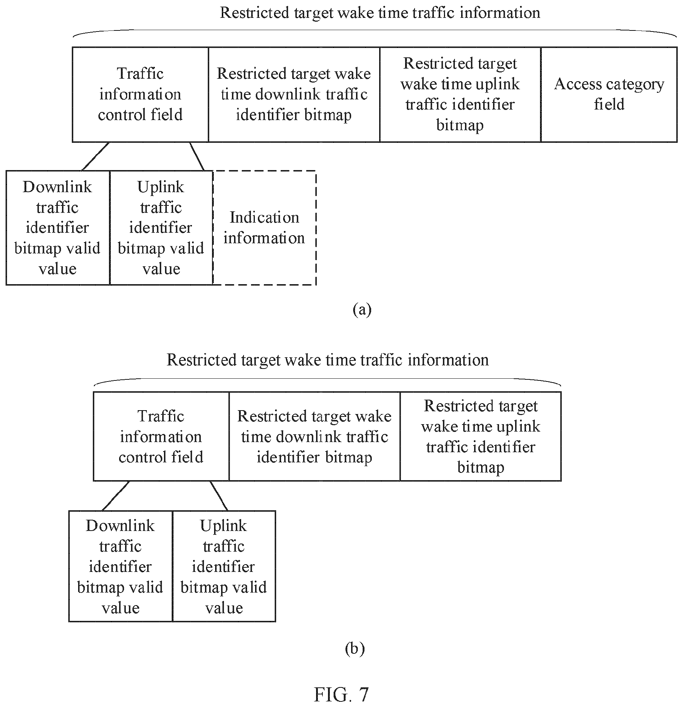

FIG. 4 and FIG. 5 describe an embodiment in which the setup request information includes the indication information of the first AC. FIG. 6 and FIG. 7 describe an embodiment in which the response information includes the indication information of the first AC.

FIG. 4 shows another data transmission method according to an embodiment of this application. The method includes the following steps.

S410: An STA sends a TWT request frame to an AP, where the TWT request frame includes indication information of a first AC.

Correspondingly, the AP receives the TWT request frame sent by the STA.

S420: The AP sends the TWT response frame to the STA.

Correspondingly, the STA receives the TWT response frame sent by the AP.

It should be understood that the STA sends the TWT request frame to the AP, and the TWT request frame includes the indication information of the first AC. This means that the STA initiates, to the AP, the TWT request frame for requesting to set up an r-TWT protocol, and requests, in the TWT request frame, to map an AC corresponding to low-latency traffic of the STA to the first AC. In this way, there is an opportunity to subsequently complete transmission of the low-latency traffic of the STA by using the first AC determined by the STA.

It should be understood that the TWT request frame sent by the STA to the AP further includes TID information of the low-latency traffic of the STA. As described above, there is a correspondence between a TID and a UP. Table 3 provides the correspondence between a UP and an AC. In this way, an AC is configured for the low-latency traffic of the STA based on the TID information. For ease of description, the AC corresponding to the TID is referred to as a "default AC". For a specific configuration manner, refer to Table 3.

It should be understood that, the first AC indicated by the indication information that is of the first AC and that is included in the TWT request frame sent by the STA to the AP is different from the default AC that corresponds to the low-latency traffic and that is specified in Table 3, and is a new AC that can meet a transmission requirement of the low-latency traffic. For example, a TID of the low-latency traffic of the STA is 1, and an AC corresponding to the TID is AC_BK. However, because the low-latency traffic is traffic that highly requires low-latency transmission, AC_VO needs to be configured for the low-latency traffic, to meet a transmission requirement of the low-latency traffic. Therefore, the TWT request frame sent by the STA to the AP may carry indication information of AC_VO, to request the AP to change AC_BK originally corresponding to the low-latency traffic of the STA to AC_VO.

It should be understood that the indication information that is of the first AC and that is included in the TWT request frame sent by the STA to the AP is determined by the STAaccording to a transmission requirement of the low-latency traffic of the STA. When the STA determines that the default AC corresponding to the low-latency traffic of the STA cannot meet the low-latency transmission requirement, the STA sends, to the AP, the TWT request frame including the indication information of the first AC. The TWT request frame is used to request to map the default AC corresponding to the low-latency traffic of the STA to the first AC, so that the STA can flexibly request allocation of an appropriate AC to the low-latency traffic. In this manner, limitation caused when the AC corresponding to the low-latency traffic is configured based on Table 3 can be eliminated in this embodiment of this application.

In another instance, in S410#A, the STA determines that another first AC needs to be allocated for the low-latency traffic, and the STA may carry indication information of the first AC in a TWT request frame, so that the AP learns of a request that the STA needs to change the AC corresponding to the low-latency traffic of the STA.

S420#A: The AP performs determining and decision-making based on received information. The AP sends a result of the determining and decision-making to the STA by using response information.

S430#A: The STA performs a corresponding action based on the response information.

In the foregoing S430#A, that the STA performs a corresponding action based on the response information may include: If the AP agrees on the request of the STA for changing the AC corresponding to the low-latency traffic, the STA performs subsequent communication based on the indicated first AC; or if the AP rejects the request of the STA for changing the AC corresponding to the low-latency traffic, the STA performs subsequent communication based on the default AC corresponding to the TID of the low-latency traffic. In this way, the low-latency transmission requirement of the low-latency traffic is flexibly met. The communication may be uplink or downlink communication, or may include channel access.

The station carries the indication information of the first AC in the setup request information. This embodiment of this application allows the station to independently determine and choose whether to change the AC corresponding to the low-latency traffic, so that an appropriate AC can be more flexibly allocated to the low-latency traffic. Further, this can effectively resolve a problem that a default AC of some low-latency traffic cannot meet a low-latency requirement of the low-latency traffic due to the default mapping relationship between a UP and an AC, to better ensure that the transmission requirement of the low-latency traffic of the station in the r-TWT mechanism is met.

In an example of S220, S420, and S420#A, the TWT response frame sent by the AP to the STA includes indication information #A, and the indication information #A includes two values: a first value and a second value respectively. For example, the first value indicates that the AP agrees on the request of the STA for changing the AC corresponding to the low-latency traffic, and the second value indicates that the AP rejects the request of the STA for changing the AC corresponding to the low-latency traffic. Alternatively, the first value indicates that the AP rejects the request of the STA for changing the AC corresponding to the low-latency traffic, and the second value indicates that the AP agrees on the request of the STA for changing the AC corresponding to the low-latency traffic. The first value and the second value of the indication information #A may occupy one bit. For example, the first value is 1, and the second value is 0; or the first value is 0, and the second value is 1. Alternatively, the first value and the second value of the indication information #A may occupy a plurality of bits, for example, two bits. For example, the first value is 11, and the second value is 00; or the first value is 10, and the second value is 00. This is not specifically limited in this embodiment of this application.

In a possible implementation, in addition to indicating that the AP rejects the request of the STA for changing the AC corresponding to the low-latency traffic, the second value of the indication information #A can further indicate that the TWT response frame includes indication information of a second AC corresponding to the low-latency traffic of the STA.

In a specific example, S220, S420, or S420#A includes: The AP may send the indication information of the second AC to the STA by using the TWT response frame. Correspondingly, that the STA performs a corresponding action based on the response information in S430#A may include: The STA determines, based on the indication information of the second AC, the second AC corresponding to the low-latency traffic of the STA, to perform subsequent communication by using the second AC. For example, access is performed based on a channel corresponding to the second AC, to meet the low-latency transmission requirement of the low-latency traffic of the STA.

It should be understood that, the AP may send the indication information of the second AC to the STA by using the TWT response frame. This may be performed based on a case in which the AP determines that the first AC requested by the STA is unavailable, or the AP determines that the second AC is more appropriate or better than the first AC.

In still another example of S220, S420, or S420#A, the TWT response frame sent by the AP to the STA includes indication information #A, and the indication information #A includes three values: a first value, a second value, and a third value respectively. For example, the first value indicates that the AP agrees on the request of the STA for changing the AC corresponding to the low-latency traffic, the second value indicates that the AP rejects the request of the STA for changing the AC corresponding to the low-latency traffic, and the third value indicates that the TWT response frame includes indication information of a third AC corresponding to the low-latency traffic of the STA.

The access point may indicate, by using the first value or the second value of the indication information #A, that the AP agrees on or rejects the request of the STA for changing the AC corresponding to the low-latency traffic, or may indicate, by using the third value, that the TWT response frame includes the indication information of the third AC corresponding to the low-latency traffic of the STA. The AP sends the indication information of the third AC to the STA by using the TWT response frame. The STA determines, based on the indication information of the third AC, the third AC corresponding to the low-latency traffic of the STA, and selects a corresponding channel for access, to meet the low-latency transmission requirement of the low-latency traffic of the STA.

In this embodiment of this application, the access point performs determining on the indication information that is of the first AC and that is included in the setup request information sent by the station, and determines whether to agree on or reject the first AC. In this way, in this embodiment of this application, the station is provided with a right of independently determining and selecting the first AC corresponding to the low-latency traffic of the station, and an appropriate AC can be more flexibly allocated to the low-latency traffic, to better ensure that the transmission requirement of the low-latency traffic is met. In this manner, limitation caused when the AC corresponding to the low-latency traffic is configured based on Table 3 can be eliminated in this embodiment of this application.

In still another example of S210, S410, or S410#A, the TWT request frame sent by the STA to the AP includes indication information #B, and the indication information #B includes two values: a first value and a second value respectively. The first value indicates that the TWT request frame includes the indication information of the first AC, and the second value indicates that the TWT request frame does not include the indication information of the first AC.

Specifically, the indication information #B is located before the indication information of the first AC. In a read/write sequence, the AP first reads the indication information #B. When determining that the indication information #B indicates that the TWT request frame includes the indication information of the first AC, the AP continues to read the indication information that is of the first AC and that is included in the TWT request frame. If determining that the indication information #B indicates that the TWT request frame does not include the indication information of the first AC, the AP does not continue to read the indication information that is of the first AC and that is included in the TWT request frame. When the second value indicates that the TWT request frame does not include the indication information of the first AC, the TWT request frame may still include the indication information of the first AC, but the indication information of the first AC is invalid.

Optionally, the indication information #B may indicate whether the indication information of the first AC included in the TWT request frame is valid or invalid.

Specifically, the first value of the indication information #B indicates that the indication information that is of the first AC and that is included in the TWT request frame is valid, and the second value of the indication information #B indicates that the indication information that is of the first AC and that is included in the TWT request frame is invalid.

In this embodiment of this application, the indication information indicates whether the setup request information sent by the station to the access point includes the indication information of the first AC or whether the indication information that is of the first AC and that is included in the setup request information is valid, to better help the access point determine whether the station requests to change the AC corresponding to the low-latency traffic.

It should be noted that the TWT request frame sent by the STA to the AP may include only the indication information of the first AC. The TWT request frame may alternatively include the indication information of the first AC and the indication information #B, and the indication information #B is the first value. In this case, the TWT response frame sent by the AP to the STA includes the indication information #A, and the indication information #A indicates an opinion of the AP on the request of the STA for changing the AC corresponding to the low-latency traffic. If the AP rejects the request of the STA for changing the AC corresponding to the low-latency traffic, and recommends a new AC, the TWT response frame further includes indication information of the new AC, for example, the indication information of the second AC or the indication information of the third AC.

The following further describes the technical solution shown in FIG. 4 with reference to FIG. 5. FIG. 4 is a diagram of a frame structure of the restricted target wake time traffic information according to embodiments of this application.

It should be understood that restricted target wake time traffic information shown in FIG. 5(a) is borne in the TWT request frame, and restricted target wake time traffic information shown in FIG. 5(b) is borne in the TWT response frame.

In FIG. 5(a), the restricted target wake time traffic information (restricted TWT traffic information) includes a traffic information control (traffic information control) field, a restricted TWT downlink traffic identifier bitmap (restricted TWT DL TID bitmap), a restricted TWT uplink traffic identifier bitmap (restricted TWT UL TID bitmap), and an access category field.

Specifically, the traffic information control field includes a downlink traffic identifier bitmap valid (DL TID bitmap valid) value and an uplink traffic identifier bitmap valid (UL TID bitmap valid) value (for details, refer to an existing protocol standard 802.11be 9.4.2.199 TWT element). The downlink traffic identifier bitmap valid (DL TID bitmap valid) value indicates whether a downlink traffic identifier bitmap is valid. The uplink traffic identifier bitmap valid (UL TID bitmap valid) value indicates whether an uplink traffic identifier bitmap is valid.

It should be understood that the restricted TWT DL TID bitmap and the restricted TWT UL TID bitmap carry the TID information corresponding to the low-latency traffic of the STA.

Optionally, the traffic information control field may further include indication information, and the indication information is used to carry the indication information #B.

It should be understood that the indication information used to carry the indication information #B may occupy one or more bits in B2 to B7, where B2 indicates the third bit, and B7 indicates the eighth bit. For example, when one bit is occupied, 1 indicates that the TWT request frame includes the indication information of the first AC, and 0 indicates that the TWT request frame does not include the indication information of the first AC. However, the TWT request frame may still reserve the indication information of the first AC. The access category field is used to carry the indication information of the first AC. B0 and B1 are respectively used to carry the DL TID bitmap valid and the UL TID bitmap valid, and the "valid" occupies only one bit.

It should be noted that, in the technical solution shown in FIG. 5, because the indication information of the AC is borne in the foregoing access category field, when the indication information included in the traffic information control field indicates whether the indication information of the AC is included, the meaning is equivalent to indicating whether the access category field is included (if the access category field is always included, the meaning may be equivalent to indicating whether the access category field includes valid information). A unified description is provided herein and details are not described below again.

In FIG. 5(b), the restricted target wake time traffic information includes a traffic information control field, a restricted downlink traffic identifier bitmap, and a restricted uplink traffic identifier bitmap. The traffic information control field includes a downlink traffic identifier bitmap valid value, an uplink traffic identifier bitmap valid value, and indication information. The indication information is used to carry the foregoing indication information #A.

It should be understood that the indication information used to carry the indication information #A may occupy one or more bits in B2 to B7, where B2 indicates the third bit, and B7 indicates the eighth bit. For example, when one bit is occupied, 1 indicates that the AP agrees on the request of the STA for changing the AC corresponding to the low-latency traffic, and 0 indicates that the AP does not agree on the request of the STA for changing the AC corresponding to the low-latency traffic. Alternatively, 1 indicates that the AP does not agree on the request of the STA for changing the AC corresponding to the low-latency traffic, and 0 indicates that the AP agrees on the request of the STA for changing the AC corresponding to the low-latency traffic. For another example, when two bits are occupied, 11 indicates that the AP agrees on the request of the STA for changing the AC corresponding to the low-latency traffic, 00 indicates that the AP rejects the request of the STA for changing the AC corresponding to the low-latency traffic, and 10 indicates that the TWT response frame includes the indication information of the second AC. Alternatively, 11 indicates that the AP rejects the request of the STA for changing the AC corresponding to the low-latency traffic, 00 indicates that the AP agrees on the request of the STA for changing the AC corresponding to the low-latency traffic, and 10 indicates that the TWT response frame includes the indication information of the second AC. B0 and B1 are respectively used to carry the DL TID bitmap valid and the UL TID bitmap valid, and the "valid" occupies only one bit.

It should be understood that, when the TWT response frame sent by the AP to the STA carries the indication information of the second AC, the indication information of the second AC may be borne in a newly added field, namely, an access category field, of the restricted TWT traffic information in the TWT response frame. In other words, the frame structure of the restricted TWT traffic information of the TWT response frame may be the same as a frame structure of restricted TWT traffic information of the TWT request frame.

It should be understood that the restricted TWT DL TID bitmap and the restricted TWT UL TID bitmap respectively carry TID information corresponding to downlink low-latency traffic and TID information corresponding to uplink low-latency traffic of the STA.

It should be understood that the restricted TWT traffic information belongs to target wake time element information, and the target wake time element information is partial information of the TWT response frame or the TWT request frame. The target wake time element information may be a TWT element, or may be other information, for example, a TWT information element, an r-TWT element (or an r-TWT information element), or an r-TWT SPs (service periods, SPs) element.

It should be noted that, in an example, when the AP rejects the request of the STA for changing the AC corresponding to the low-latency traffic and does not recommend a new AC, the restricted TWT traffic information of the TWT response frame may not include the access category field. If the restricted TWT traffic information of the TWT response frame includes the access category field, and the field is not used to indicate the STA to perform access based on the AC indicated by the indication information, one or more bits in the indication information may be used in the traffic information control field of the restricted TWT traffic information of the TWT response frame to indicate that the access category field is invalid. For a specific form, refer to the indication information #A or the indication information #B. In this case, the access category field may be used to indicate other information. Details are not described in this application.

FIG. 6 shows still another data transmission method according to embodiments of this application. The method includes the following steps.

S610: An STA sends a TWT request frame to an AP.

Correspondingly, the AP receives the TWT request frame sent by the STA.

S620: The AP sends a TWT response frame to the STA, where the TWT response frame includes indication information of a first AC.

Correspondingly, the STA receives the TWT response frame sent by the AP.

It should be understood that, when the TWT request frame sent by the STA to the AP does not include the indication information of the first AC, it indicates that the STA does not request to change a mapping relationship between low-latency traffic of the STA and the AC, but the TWT response frame sent by the AP to the STA includes the indication information of the first AC.

Specifically, the AP can independently determine whether to allocate a new AC to the low-latency traffic of the STA, that is, an AC different from an AC corresponding to a TID of the STA by default. The AP may determine, based on characteristics (for example, different intra basic service set latencies (intra basic service set latencies), a jitter variance (jitter variance), a packet loss (packet loss), and a data rate (data rate)) of the low-latency traffic of the STA, whether the traffic needs to be indicated to use another AC. For example, the AP may learn, in advance, characteristics of some low-latency traffic of the STA by using a quality of service characteristic element (quality of service characteristic element) sent by the STA end. When determining to allocate a first AC to the low-latency traffic of the STA, the AP carries indication information of the first AC in the TWT response frame. The STA performs a corresponding action based on the indication information of the first AC in the TWT response frame.

The access point independently determines whether to allocate a new AC to the low-latency traffic of the station. This embodiment of this application allows the access point to independently determine, so that an appropriate AC can be more flexibly allocated to the low-latency traffic. Further, this can effectively resolve a problem that a default AC of some low-latency traffic cannot meet a low-latency requirement of the low-latency traffic due to a default mapping relationship between a UP and the AC, and therefore better ensure that a transmission requirement of the low-latency traffic of the station in an r-TWT mechanism is met.

In the foregoing one or more implementations, the station or the access point flexibly configures a new AC for the low-latency traffic. Embodiments of this application are flexible because limitation caused when the AC corresponding to the low-latency traffic is configured based on Table 3 is eliminated. In addition, in embodiments of this application, the station or the access point can independently and selectively configure the AC for the low-latency traffic. Therefore, in embodiments of this application, based on the foregoing technical solution, an AC corresponding to the low-latency traffic of the STA can be flexibly configured. Generally, in an example, a level of the new AC is higher than a level of an AC corresponding to a TID of the low-latency traffic by default. In this way, a low-latency transmission requirement of the low-latency traffic of the STA in the r-TWT mechanism can be better met.

In an example, in an example of S220 and S420, the TWT response frame sent by the AP to the STA includes indication information #C, and the indication information #C includes two values: a first value and a second value respectively. The first value indicates that the TWT response frame includes an indication information field of the first AC, and the second value indicates that the TWT response frame does not include the indication information field of the first AC.

Specifically, the indication information #C is located before the indication information of the first AC. In a read/write sequence, the STA first reads the indication information #C. When determining that the indication information #C indicates that the TWT response frame includes the indication information field of the first AC, the STA continues to read the indication information of the first AC included in the TWT response frame. If determining that the indication information #C indicates that the TWT response frame does not include the indication information field of the first AC, the STA does not continue to read the indication information of the first AC included in the TWT response frame. When the second value indicates that the TWT response frame includes the indication information field of the first AC, the TWT response frame may still include the indication information field of the first AC.

Optionally, the indication information #C may indicate that the indication information of the first AC included in the TWT response frame is valid or invalid.

Specifically, the first value of the indication information #C indicates that the indication information of the first AC included in the TWT response frame is valid, and the second value of the indication information #C indicates that the indication information of the first AC included in the TWT response frame is invalid.

In embodiments of this application, the indication information indicates whether a response information sent by the access point to the station includes the indication information of the first AC or whether the indication information that is of the first AC and that is included in the response information is valid, to better help the station determine whether the access point changes the AC corresponding to the low-latency traffic of the station, thereby saving communication resources or improving a communication processing speed.

The following further describes the technical solution shown in FIG. 6 with reference to FIG. 7. FIG. 7 is a diagram of another frame structure of restricted target wake time traffic information according to embodiments of this application.

It should be understood that restricted target wake time traffic information shown in FIG. 7(a) is borne in the TWT response frame, and restricted target wake time traffic information shown in FIG. 7(b) is borne in the TWT request frame.

In FIG. 7(a), the restricted target wake time traffic information includes a traffic information control field, a restricted downlink traffic identifier bitmap, a restricted uplink traffic identifier bitmap, and an access category field.

Specifically, the traffic information control field includes a downlink traffic identifier bitmap valid value and an uplink traffic identifier bitmap valid value, and the downlink traffic identifier bitmap valid value indicates whether the downlink traffic identifier bitmap is valid. The uplink traffic identifier bitmap valid value indicates whether the uplink traffic identifier bitmap is valid.

It should be understood that the restricted TWT DL TID bitmap and the restricted TWT UL TID bitmap carry the TID information corresponding to the low-latency traffic of the STA.

Optionally, the traffic information control field may further include indication information, and the indication information is used to carry the indication information #C.

It should be understood that the indication information used to carry the indication information #C may occupy one or more bits in B2 to B7, where B2 indicates the third bit, and B7 indicates the eighth bit. For example, when one bit is occupied, 1 indicates that the TWT response frame includes the indication information field of the first AC, and 0 indicates that the TWT response frame does not include the indication information field of the first AC. However, the TWT response frame may still reserve the indication information field of the first AC. The access category field is used to carry the indication information of the first AC. B0 and B1 are respectively used to carry the DL TID bitmap valid and the UL TID bitmap valid, and the "valid" occupies only one bit.

In FIG. 7(b), the restricted target wake time traffic information includes a traffic information control field, a restricted downlink traffic identifier bitmap, and a restricted uplink traffic identifier bitmap. The traffic information control field includes a downlink traffic identifier bitmap valid value and an uplink traffic identifier bitmap valid value.

It should be understood that the restricted TWT DL TID bitmap and the restricted TWT UL TID bitmap respectively carry TID information corresponding to downlink low-latency traffic and TID information corresponding to uplink low-latency traffic of the STA.

It should be understood that the restricted TWT traffic information belongs to target wake time element information, and the target wake time element information is partial information of the TWT response frame or the TWT request frame. The target wake time element information may be a TWT element, or may be other information, for example, a TWT information element, an r-TWT element (or an r-TWT information element), or an r-TWT SPs (service periods, SPs) element.

It should be understood that the access category fields in the restricted target wake time traffic information shown in FIG. 5 and FIG. 7 include eight bits, and the traffic information control field includes eight bits, or certainly may include more bits. This is not limited in embodiments of this application. The eight bits of the access category field may indicate both indication information of a new AC corresponding to the downlink low-latency traffic of the station and indication information of a new AC corresponding to the uplink low-latency traffic of the station. In addition, when the traffic information control field includes the indication information, the indication information may occupy one or more bits in B2 to B7 to only indicate whether the indication information of the AC is included in the access category field, or a plurality of bits may be used to indicate whether the indication information of the new AC corresponding to the downlink low-latency traffic or the indication information of the new AC corresponding to the uplink low-latency traffic is included in the access category field.

It should be understood that, when the STA requests the AP to change the AC corresponding to the low-latency traffic, the STA may carry an access category field in the restricted TWT traffic information of the TWT request frame, and the access category field is used to carry the indication information of the AC.

Optionally, the STA may further carry, in the indication information (if the indication information is included) in the traffic information control field of the restricted TWT traffic information of the TWT request frame, indication information indicating whether an access category field is included or indicating whether the included access category field is valid.

In a possible implementation, the restricted TWT traffic information of the TWT request frame sent by the STA to the AP may always carry the access category field. When the STA does not request to change the AC corresponding to the low-latency traffic, the indication information (if the indication information is included) in the traffic information control field of the restricted TWT traffic information of the TWT request frame may carry indication information indicating that the access category field included in the TWT request frame is invalid. Therefore, the AP learns of a request that the STA does not change the AC corresponding to the low-latency traffic.

It should be understood that, when the AP wants to change the AC corresponding to the low-latency traffic of the STA, the AP may carry an access category field in the restricted TWT traffic information of the TWT response frame, and the access category field is used to carry indication information of the AC.

Optionally, the AP may further carry, in the indication information (if the indication information is included) in the traffic information control field of the restricted TWT traffic information of the TWT response frame, indication information indicating whether the TWT response frame includes the access category field or indicating whether the access category field included in the TWT response frame is valid.

In a possible implementation, the restricted TWT traffic information of the TWT response frame sent by the AP to the STA may always carry the access category field. When the AP does not indicate to change the AC corresponding to the low-latency traffic, the indication information (if the indication information is included) in the traffic information control field of the restricted TWT traffic information of the TWT response frame may carry indication information indicating that the access category field included in the TWT response frame is invalid, so that the STA learns that the AP does not indicate to change the AC corresponding to the low-latency traffic.

In an example, both the TWT request frame sent by the STA to the AP and the TWT response frame sent by the AP to the STA include the indication information of the AC, and the STA needs to perform a corresponding action based on whether the AC indicated by the indication information of the AC sent by the AP is the same as the AC requested by the STA.

For example, the TWT request frame sent by the STA to the AP includes the indication information of the first AC, and the TWT response frame sent by the AP to the STA includes indication information of the fourth AC. If the fourth AC indicated by the indication information of the fourth AC is different from the first AC indicated by the indication information of the first AC, the STA performs access based on a channel indicated by the first AC. If the fourth AC indicated by the indication information of the fourth AC is the same as the first AC indicated by the indication information of the first AC, the STA may perform access based on the channel indicated by the first AC.

In a possible implementation, when both the TWT request frame and the TWT response frame include indication information indicating whether the AC is included or indication information indicating whether the indication information including the AC is valid, the STA further performs a corresponding action.

For example, the TWT response frame includes the indication information of the fourth AC and indication information #D, and the indication information #D indicates that the indication information of the fourth AC is valid. When the STA requests to change the AC corresponding to the low-latency traffic, if the STA requests the first AC, and the first AC is the same as the fourth AC, it indicates that the AP agrees on the request of the STA for changing the AC corresponding to the low-latency traffic. If the STA requests the first AC, and the first AC is different from the fourth AC, it indicates that the AP rej ects the request of the STA for changing the AC corresponding to the low-latency traffic, and recommends that the STA perform channel access based on the fourth AC.

For another example, the TWT response frame includes the indication information of the fourth AC and indication information #D, and the indication information #D indicates that the indication information of the fourth AC is invalid. When the STA requests to change the AC corresponding to the low-latency traffic, if the STA requests the first AC, and the first AC is the same as the fourth AC, it indicates that the AP rejects the request of the STA for changing the AC corresponding to the low-latency traffic. If the STA requests the first AC, and the first AC is different from the fourth AC, it indicates that the AP rejects the request of the STA for changing the AC corresponding to the low-latency traffic, and does not recommend a new AC.

In another possible implementation, either of the TWT request frame and the TWT response frame may include indication information indicating whether the AC is included or indication information indicating whether the indication information including the AC is valid, and the other one does not include the indication information indicating whether the AC is included or the indication information indicating whether the indication information including the AC is valid. For a specific implementation, refer to the foregoing content about the indication information #C or the indication information #B, and details are not described herein again.

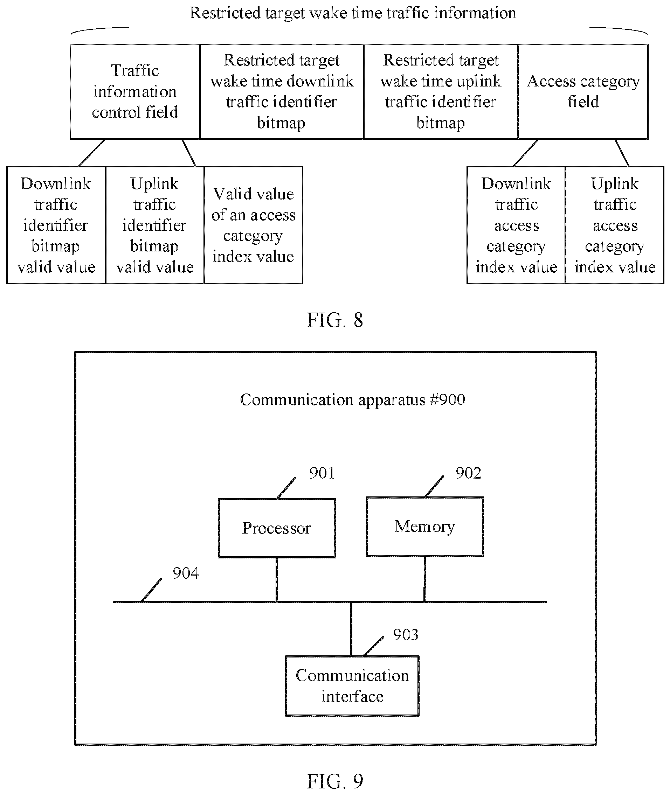

The following further describes the foregoing technical solution with reference to FIG. 8.

FIG. 8 is a diagram of yet another frame structure of the restricted target wake time traffic information according to embodiments of this application. Details may be shown in FIG. 8.

It should be understood that the restricted target wake time traffic information shown in FIG. 8 belongs to the TWT response frame. The restricted target wake time traffic information includes a traffic information control field, a restricted downlink traffic identifier bitmap, a restricted uplink traffic identifier bitmap, and an access category field.

Specifically, the traffic information control field includes a downlink traffic identifier bitmap valid value, an uplink traffic identifier bitmap valid value, and a valid value of an access category index value. The access category field includes a downlink traffic access category index value and an uplink traffic access category index value. The downlink traffic access category index value is a new AC configured for downlink low-latency traffic of the STA, and the uplink traffic access category index value is a new AC configured for uplink low-latency traffic of the STA. When two index values do not occupy all bits of the access category field, remaining bits are used for reserved bits.

Further, the AP indicates, by using the valid value of the access category index value in the traffic information control field in the restricted TWT traffic information of the TWT response frame, whether to request to change the AC corresponding to the low-latency traffic.

It should be understood that the valid value of the access category index value may indicate to change the AC corresponding to the low-latency traffic, or may indicate not to change the AC corresponding to the low-latency traffic.

It should be noted that when the valid value of the access category index value in the traffic information control field indicates to change the AC corresponding to the low-latency traffic, the change may be for the downlink low-latency traffic, or may be for the uplink low-latency traffic, or may be for both the uplink low-latency traffic and the downlink low-latency traffic. This is not specifically limited in embodiments of this application.

In an example, in embodiments of this application, two valid values of the access category index value may be set, to respectively indicate whether the downlink traffic access category index value and the uplink traffic access category index value are valid.

It should be noted that the description of the foregoing technical solution based on FIG. 8 is merely an example and a simple description, and is not all descriptions of the foregoing technical solution.

In a possible implementation, the access category field is a bitmap. A new AC corresponding to the downlink low-latency traffic and a new AC corresponding to the uplink low-latency traffic are borne in the bitmap, and the AP may also indicate the STA to change the AC corresponding to the low-latency traffic.

It should be understood that the foregoing description may also be applied to the TWT response frame sent by the access point to the station. A solution is basically similar, and details are not described herein again.

It should be understood that when the indication information of the AC is indicated by using a bitmap, the bitmap may be similar to the foregoing restricted uplink traffic identifier bitmap or restricted downlink traffic identifier bitmap, but indicated content may be different, because the bitmap carries indication content of a new AC configured by the station or the access point for the low-latency traffic of the station.

It should be understood that, in embodiments of this application, when the indication information of the first AC is indicated by using the bitmap, the bitmap may be divided into an uplink AC bitmap and a downlink AC bitmap. Each bit of the uplink AC bitmap is corresponding to one AC. A bit corresponding to an AC is set to 1 to indicate an AC used for the uplink low-latency traffic, and a bit corresponding to the AC is set to 0 to indicate that the AC is not used. Alternatively, a bit corresponding to an AC is set to 0 to indicate an AC used for the uplink low-latency traffic, and a bit corresponding to the AC is set to 1 to indicate that the AC is not used. The same applies to the downlink AC bitmap.

It should be noted that the low-latency traffic of the STA may be uplink traffic, or may be downlink traffic. The setup request information sent by the STA to the AP may indicate only the uplink traffic or the downlink traffic, or may indicate both the uplink traffic and the downlink traffic. In this case, the indication information of the first AC included in the setup request information or the response information needs to be corresponding to the fact that only the uplink traffic or the downlink traffic is included, or may be corresponding to the fact that both the uplink traffic and the downlink traffic are indicated.

For example, if the setup request information sent by the STA to the AP indicates the uplink traffic or the downlink traffic, the indication information of the first AC of the station included in the setup request information or the response information is either corresponding to the uplink traffic or corresponding to the downlink traffic. For example, if the setup request information sent by the STA to the AP indicates both the uplink traffic and the downlink traffic, the indication information of the first AC included in the setup request information or the response information needs to be respectively corresponding to the uplink traffic and the downlink traffic. This is because the access category field used to carry the indication information of the AC includes eight bits, and the field may indicate new ACs respectively corresponding to the uplink low-latency traffic and the low-latency traffic.

The foregoing describes the method embodiments of this application, and the following describes corresponding apparatus embodiments.

FIG. 9 is a diagram of a communication apparatus according to an embodiment of this application. The communication apparatus includes a processor 901, a memory 902, and a communication interface 903. The processor 901, the memory 902, and the communication interface 903 are connected to each other by using a bus 904. It should be understood that the communication apparatus shown in FIG. 9 may be an access point, or may be a station.

The memory 902 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 902 is configured to store related instructions and data.

The processor 901 may be one or more central processing units (central processing unit, CPUs). When the processor 901 is one CPU, the CPU may be a single-core CPU, or may be a multi-core CPU.

When the communication apparatus is an access point, the processor 901 in the communication apparatus is configured to read program code stored in the memory 902, to perform the following operations:
receiving, by using the communication interface, restricted target wake time setup request information sent by a station, where the restricted target wake time setup request information is used to request to set up a restricted target wake time; and
sending restricted target wake time response information to the station by using the communication interface, where the restricted target wake time response information is a response to the restricted target wake time setup request information, and the restricted target wake time setup request information or the restricted target wake time response information includes indication information of a first AC.

In a possible implementation, the setup request information includes indication information #B, and the response information includes indication information #A, indication information #C, or indication information #D. For specific content, reference may be made to the description of the foregoing method embodiment, and details are not described herein again.

When the communication apparatus is a station, the processor 901 in the communication apparatus is configured to read program code stored in the memory 902, to perform the following operations:
sending restricted target wake time setup request information by using the communication interface, where the restricted target wake time setup request information is used to request to set up a restricted target wake time; and
receiving, by using the communication interface, restricted target wake time response information sent by an access point, where the restricted target wake time response information is a response to the restricted target wake time setup request information, and the restricted target wake time setup request information or the restricted target wake time response information includes indication information of a first AC.

In a possible implementation, the setup request information includes indication information #B, and the response information includes indication information #A, indication information #C, or indication information #D. For specific content, reference may be made to the description of the foregoing method embodiment, and details are not described herein again.

In addition, for implementation of each operation in FIG. 9, refer to a corresponding description of the method embodiment shown in FIG. 2.

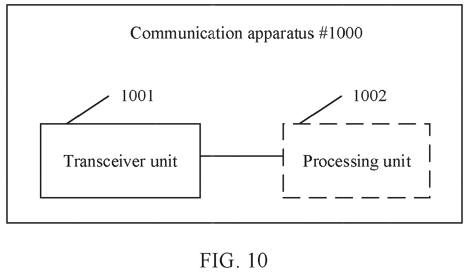

FIG. 10 is a diagram of another communication apparatus according to an embodiment of this application. The communication apparatus is used in an access point, or may be used in a station, and may be configured to implement the method in the foregoing embodiment. The communication apparatus includes a transceiver unit 1001. The following describes the transceiver unit 1001.

When the communication apparatus is an access point, the transceiver unit 1001 is configured to receive restricted target wake time setup request information sent by a station, and send restricted target wake time response information to the station.

Optionally, the communication apparatus further includes a processing unit 1002. The processing unit is configured to perform actions such as decision making and determining in the foregoing method embodiment. For example, when determining to change an AC corresponding to low-latency traffic of the station, the access point is configured to determine to send the response information including the indication information of the first AC to the station.

When the communication apparatus is a station, the transceiver unit 1001 is configured to send restricted target wake time setup request information to an access point, and receive restricted target wake time response information sent by the access point.

Optionally, the communication apparatus further includes a processing unit 1002. The processing unit is configured to perform actions such as decision making and determining in the foregoing method embodiment. For example, when determining to need to request an AC corresponding to low-latency traffic be changed, the station is configured to determine to send the setup request information including the indication information of the first AC to the access point.

In addition, for implementation of each operation in FIG. 10, refer to a corresponding description of the method shown in the foregoing embodiment. Details are not described herein again.

An embodiment of this application further provides a chip, including a processor, configured to invoke, from a memory, instructions stored in the memory and run the instructions, to enable a communication device on which the chip is installed to perform the methods in the foregoing examples.

An embodiment of this application further provides another chip, including an input interface, an output interface, a processor, and a memory. The input interface, the output interface, the processor, and the memory are connected by using an internal connection path. The processor is configured to execute code in the memory. When the code is executed, the processor is configured to perform the methods in the foregoing examples.

An embodiment of this application further provides a processor, configured to be coupled to a memory, and configured to perform a method and a function that are related to a satellite or user equipment in any one of the foregoing embodiments.

In another embodiment of this application, a computer program product is provided. When the computer program product is run on a computer, the method in the foregoing embodiment is implemented.

In another embodiment of this application, a computer-readable storage medium is provided. The computer-readable storage medium stores a computer program. When the computer program is executed by a computer, the method in the foregoing embodiment is implemented.

In the descriptions of embodiments of this application, the term "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that have basically the same functions and effects. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description.

Any embodiment or design described by "example" or "for example" in embodiments of this application should not be construed as being more preferred or advantageous than another embodiment or design. Exactly, use of the terms such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists, where A and B may be singular or plural.

It should be understood that "one embodiment" or "an embodiment" mentioned throughout this specification means that particular features, structures, or characteristics related to embodiments are included in at least one embodiment of the present invention.

Therefore, "in one embodiment" or "in an embodiment" appearing throughout the specification does not necessarily refer to a same embodiment. In addition, these particular features, structures, or characteristics may be combined in one or more embodiments in any appropriate manner. Sequence numbers of the foregoing processes do not mean execution sequences in various embodiments of the present invention. The execution sequences of the processes should be determined based on functions and internal logic of the processes, and should not be construed as any limitation on the implementation processes of embodiments of the present invention.

It may be understood that an "embodiment" mentioned throughout this specification means that particular features, structures, or characteristics related to embodiments are included in at least one embodiment of this application.

Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed systems, apparatuses, and methods may be implemented in other manners. For example, the described apparatus embodiment is merely an example. For example, division into the units is merely logical function division and may be another division manner in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

If the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application.

## Claims

1. A data transmission method, comprising:
receiving (S210), by an access point, restricted target wake time setup request information sent by a station, wherein the restricted target wake time setup request information is used to request to set up a restricted target wake time; and
sending (S220), by the access point, restricted target wake time response information to the station, wherein the restricted target wake time response information is used to respond to the restricted target wake time setup request information, wherein
the restricted target wake time setup request information or the restricted target wake time response information comprises indication information of a first access category corresponding to low-latency traffic of the station, and the indication information of the first access category is an access category index value or a bitmap.

2. The method according to claim 1, wherein the restricted target wake time response information comprises first indication information; and
when the first indication information is a first value, the first value indicates that the restricted target wake time response information comprises the indication information of the first access category; or
when the first indication information is a second value, the second value indicates that the restricted target wake time response information does not comprise the indication information of the first access category.

3. The method according to claim 1, wherein the restricted target wake time setup request information comprises second indication information; and
when the second indication information is a first value, the first value indicates that the restricted target wake time setup request information comprises the indication information of the first access category; or
when the second indication information is a second value, the second value indicates that the restricted target wake time setup request information does not comprise the indication information of the first access category.

4. The method according to claim 1 or 3, wherein when the restricted target wake time setup request information comprises the indication information of the first access category, the restricted target wake time response information comprises third indication information; and
when the third indication information is a first value, the first value indicates that the access point agrees on the indication information of the first access category; or
when the third indication information is a second value, the second value indicates that the access point rejects the indication information of the first access category.

5. The method according to claim 4, wherein the second value further indicates that the restricted target wake time response information further comprises indication information of a second access category corresponding to the low-latency traffic of the station.

6. The method according to claim 1 or 3, wherein when the restricted target wake time setup request information comprises the indication information of the first access category, the restricted target wake time response information comprises fourth indication information; and
when the fourth indication information is a first value, the first value indicates that the access point agrees on the indication information of the first access category; or
when the fourth indication information is a second value, the second value indicates that the access point rejects the indication information of the first access category; or
when the fourth indication information is a third value, the third value indicates that the restricted target wake time response information further comprises indication information of a third access category corresponding to the low-latency traffic of the station.

7. A data transmission method, comprising:
sending, by a station, restricted target wake time setup request information to an access point, wherein the restricted target wake time setup request information is used to request to set up a restricted target wake time; and
receiving, by the station, restricted target wake time response information sent by the access point, wherein the restricted target wake time response information is used to respond to the restricted target wake time setup request information, wherein
the restricted target wake time setup request information or the restricted target wake time response information comprises indication information of a first access category corresponding to low-latency traffic of the station, and the indication information of the first access category is an access category index value or a bitmap.

8. The method according to claim 7, wherein the restricted target wake time response information comprises first indication information; and
when the first indication information is a first value, the first value indicates that the restricted target wake time response information comprises the indication information of the first access category; or
when the first indication information is a second value, the second value indicates that the restricted target wake time response information does not comprise the indication information of the first access category.

9. The method according to claim 7, wherein the restricted target wake time setup request information comprises second indication information; and
when the second indication information is a first value, the first value indicates that the restricted target wake time setup request information comprises the indication information of the first access category; or
when the second indication information is a second value, the second value indicates that the restricted target wake time setup request information does not comprise the indication information of the first access category.

10. The method according to claim 7 or 9, wherein when the restricted target wake time setup request information comprises the indication information of the first access category, the restricted target wake time response information comprises third indication information; and
when the third indication information is a first value, the first value indicates that the access point agrees on the indication information of the first access category; or
when the third indication information is a second value, the second value indicates that the access point rejects the indication information of the first access category.

11. The method according to claim 10, wherein the second value further indicates that the restricted target wake time response information further comprises indication information of a second access category corresponding to the low-latency traffic of the station.

12. The method according to claim 7 or 9, wherein when the restricted target wake time setup request information comprises the indication information of the first access category, the restricted target wake time response information comprises fourth indication information; and
when the fourth indication information is a first value, the first value indicates that the access point agrees on the indication information of the first access category; or
when the fourth indication information is a second value, the second value indicates that the access point rejects the indication information of the first access category; or
when the fourth indication information is a third value, the third value indicates that the restricted target wake time response information further comprises indication information of a third access category corresponding to the low-latency traffic of the station.

13. A communication device (900), comprising a communication interface (903) and a processor (901), wherein the processor (901) is configured to execute a computer program or instructions, so that the communication device (900) performs the method according to any one of claims 1 to 12.

14. A computer-readable storage medium, comprising a computer program or instructions, wherein when the computer program or the instructions are run on a computer, the computer is enabled to perform the method according to any one of claims 1 to 12.

15. A computer program product, comprising instructions, wherein when the instructions are run on a computer, the computer is enabled to perform the method according to any one of claims 1 to 12.

## Patentansprüche

1. Datenübertragungsverfahren, umfassend:
Empfangen (S210), durch einen Zugangspunkt, von durch eine Station gesendeten beschränkten Zielweckzeiteinrichtungsanforderungsinformationen, wobei die beschränkten Zielweckzeiteinrichtungsanforderungsinformationen verwendet werden, um das Einrichten einer beschränkten Zielweckzeit anzufordern; und
Senden (S220), durch den Zugangspunkt, von beschränkten Zielweckzeitantwortinformationen an die Station, wobei die beschränkten Zielweckzeitantwortinformationen verwendet werden, um auf die beschränkten Zielweckzeiteinrichtungsanforderungsinformationen zu antworten, wobei
die beschränkten Zielweckzeiteinrichtungsanforderungsinformationen oder die beschränkten Zielweckzeitantwortinformationen Anzeigeinformationen einer ersten Zugangskategorie umfassen, die Verkehr mit geringer Latenz der Station entspricht, und die Anzeigeinformationen der ersten Zugangskategorie ein Zugangskategorieindexwert oder eine Bitmap sind.

2. Verfahren nach Anspruch 1, wobei die beschränkten Zielweckzeitantwortinformationen erste Anzeigeinformationen umfassen; und
wenn die ersten Anzeigeinformationen ein erster Wert sind, der erste Wert anzeigt, dass die beschränkten Zielweckzeitantwortinformationen die Anzeigeinformationen der ersten Zugangskategorie umfassen; oder
wenn die ersten Anzeigeinformationen ein zweiter Wert sind, der zweite Wert anzeigt, dass die beschränkten Zielweckzeitantwortinformationen die Anzeigeinformationen der ersten Zugangskategorie nicht umfassen.

3. Verfahren nach Anspruch 1, wobei die beschränkten Zielweckzeiteinrichtungsanforderungsinformationen zweite Anzeigeinformationen umfassen; und
wenn die zweiten Anzeigeinformationen ein erster Wert sind, der erste Wert anzeigt, dass die beschränkten Zielweckzeiteinrichtungsanforderungsinformationen die Anzeigeinformationen der ersten Zugangskategorie umfassen; oder
wenn die zweiten Anzeigeinformationen ein zweiter Wert sind, der zweite Wert anzeigt, dass die beschränkten Zielweckzeiteinrichtungsanforderungsinformationen die Anzeigeinformationen der ersten Zugangskategorie nicht umfassen.

4. Verfahren nach Anspruch 1 oder 3, wobei, wenn die beschränkten Zielweckzeiteinrichtungsanforderungsinformationen die Anzeigeinformationen der ersten Zugangskategorie umfassen, die beschränkten Zielweckzeitantwortinformationen dritte Anzeigeinformationen umfassen; und
wenn die dritten Anzeigeinformationen ein erster Wert sind, der erste Wert anzeigt, dass der Zugangspunkt mit den Anzeigeinformationen der ersten Zugangskategorie übereinstimmt; oder
wenn die dritten Anzeigeinformationen ein zweiter Wert sind, der zweite Wert anzeigt, dass der Zugangspunkt die Anzeigeinformationen der ersten Zugangskategorie ablehnt.

5. Verfahren nach Anspruch 4, wobei der zweite Wert ferner anzeigt, dass die beschränkten Zielweckzeitantwortinformationen ferner Anzeigeinformationen einer zweiten Zugangskategorie umfassen, die dem Verkehr mit geringer Latenz der Station entspricht.

6. Verfahren nach Anspruch 1 oder 3, wobei, wenn die beschränkten Zielweckzeiteinrichtungsanforderungsinformationen die Anzeigeinformationen der ersten Zugangskategorie umfassen, die beschränkten Zielweckzeitantwortinformationen vierte Anzeigeinformationen umfassen; und
wenn die vierten Anzeigeinformationen ein erster Wert sind, der erste Wert anzeigt, dass der Zugangspunkt mit den Anzeigeinformationen der ersten Zugangskategorie übereinstimmt; oder
wenn die vierten Anzeigeinformationen ein zweiter Wert sind, der zweite Wert anzeigt, dass der Zugangspunkt die Anzeigeinformationen der ersten Zugangskategorie ablehnt; oder
wenn die vierten Anzeigeinformationen ein dritter Wert sind, der dritte Wert anzeigt, dass die beschränkten Zielweckzeitantwortinformationen ferner Anzeigeinformationen einer dritten Zugangskategorie umfassen, die dem Verkehr mit geringer Latenz der Station entspricht.

7. Datenübertragungsverfahren, umfassend:
Senden, durch eine Station, von beschränkten Zielweckzeiteinrichtungsanforderungsinformationen an einen Zugangspunkt, wobei die beschränkten Zielweckzeiteinrichtungsanforderungsinformationen verwendet werden, um das Einrichten einer beschränkten Zielweckzeit anzufordern; und
Empfangen, durch die Station, von durch den Zugangspunkt gesendeten beschränkten Zielweckzeitantwortinformationen, wobei die beschränkten Zielweckzeitantwortinformationen verwendet werden, um auf die beschränkten Zielweckzeiteinrichtungsanforderungsinformationen zu antworten, wobei
die beschränkten Zielweckzeiteinrichtungsanforderungsinformationen oder die beschränkten Zielweckzeitantwortinformationen Anzeigeinformationen einer ersten Zugangskategorie umfassen, die Verkehr mit geringer Latenz der Station entspricht, und die Anzeigeinformationen der ersten Zugangskategorie ein Zugangskategorieindexwert oder eine Bitmap sind.

8. Verfahren nach Anspruch 7, wobei die beschränkten Zielweckzeitantwortinformationen erste Anzeigeinformationen umfassen; und
wenn die ersten Anzeigeinformationen ein erster Wert sind, der erste Wert anzeigt, dass die beschränkten Zielweckzeitantwortinformationen die Anzeigeinformationen der ersten Zugangskategorie umfassen; oder
wenn die ersten Anzeigeinformationen ein zweiter Wert sind, der zweite Wert anzeigt, dass die beschränkten Zielweckzeitantwortinformationen die Anzeigeinformationen der ersten Zugangskategorie nicht umfassen.

9. Verfahren nach Anspruch 7, wobei die beschränkten Zielweckzeiteinrichtungsanforderungsinformationen zweite Anzeigeinformationen umfassen; und
wenn die zweiten Anzeigeinformationen ein erster Wert sind, der erste Wert anzeigt, dass die beschränkten Zielweckzeiteinrichtungsanforderungsinformationen die Anzeigeinformationen der ersten Zugangskategorie umfassen; oder
wenn die zweiten Anzeigeinformationen ein zweiter Wert sind, der zweite Wert anzeigt, dass die beschränkten Zielweckzeiteinrichtungsanforderungsinformationen die Anzeigeinformationen der ersten Zugangskategorie nicht umfassen.

10. Verfahren nach Anspruch 7 oder 9, wobei, wenn die beschränkten Zielweckzeiteinrichtungsanforderungsinformationen die Anzeigeinformationen der ersten Zugangskategorie umfassen, die beschränkten Zielweckzeitantwortinformationen dritte Anzeigeinformationen umfassen; und
wenn die dritten Anzeigeinformationen ein erster Wert sind, der erste Wert anzeigt, dass der Zugangspunkt mit den Anzeigeinformationen der ersten Zugangskategorie übereinstimmt; oder
wenn die dritten Anzeigeinformationen ein zweiter Wert sind, der zweite Wert anzeigt, dass der Zugangspunkt die Anzeigeinformationen der ersten Zugangskategorie ablehnt.

11. Verfahren nach Anspruch 10, wobei der zweite Wert ferner anzeigt, dass die beschränkten Zielweckzeitantwortinformationen ferner Anzeigeinformationen einer zweiten Zugangskategorie umfassen, die dem Verkehr mit geringer Latenz der Station entspricht.

12. Verfahren nach Anspruch 7 oder 9, wobei, wenn die beschränkten Zielweckzeiteinrichtungsanforderungsinformationen die Anzeigeinformationen der ersten Zugangskategorie umfassen, die beschränkten Zielweckzeitantwortinformationen vierte Anzeigeinformationen umfassen; und
wenn die vierten Anzeigeinformationen ein erster Wert sind, der erste Wert anzeigt, dass der Zugangspunkt mit den Anzeigeinformationen der ersten Zugangskategorie übereinstimmt; oder
wenn die vierten Anzeigeinformationen ein zweiter Wert sind, der zweite Wert anzeigt, dass der Zugangspunkt die Anzeigeinformationen der ersten Zugangskategorie ablehnt; oder
wenn die vierten Anzeigeinformationen ein dritter Wert sind, der dritte Wert anzeigt, dass die beschränkten Zielweckzeitantwortinformationen ferner Anzeigeinformationen einer dritten Zugangskategorie umfassen, die dem Verkehr mit geringer Latenz der Station entspricht.

13. Kommunikationsvorrichtung (900), umfassend eine Kommunikationsschnittstelle (903) und einen Prozessor (901), wobei der Prozessor (901) konfiguriert ist, um ein Computerprogramm oder Anweisungen auszuführen, so dass die Kommunikationsvorrichtung (900) das Verfahren nach einem der Ansprüche 1 bis 12 durchführt.

14. Computerlesbares Speichermedium, umfassend ein Computerprogramm oder Anweisungen, wobei, wenn das Computerprogramm oder die Anweisungen auf einem Computer ausgeführt werden, der Computer in die Lage versetzt wird, das Verfahren nach einem der Ansprüche 1 bis 12 durchzuführen.

15. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 12 durchzuführen.

## Revendications

1. Procédé de transmission de données, comprenant :
la réception (S210), par un point d'accès, d'informations de demande d'établissement de temps de réveil cible restreint envoyées par une station, dans lequel les informations de demande d'établissement de temps de réveil cible restreint sont utilisées pour demander d'établir un temps de réveil cible restreint; et
l'envoi (S220), par le point d'accès, d'informations de réponse de temps de réveil cible restreint à la station, dans lequel les informations de réponse de temps de réveil cible restreint sont utilisées pour répondre aux informations de demande d'établissement de temps de réveil cible restreint, dans lequel
les informations de demande d'établissement de temps de réveil cible restreint ou les informations de réponse de temps de réveil cible restreint comprennent des informations d'indication d'une première catégorie d'accès correspondant à un trafic à faible latence de la station, et les informations d'indication de la première catégorie d'accès correspondent à une valeur d'indice de catégorie d'accès ou un bitmap.

2. Procédé selon la revendication 1, dans lequel les informations de réponse de temps de réveil cible restreint comprennent des premières informations d'indication; et
lorsque les premières informations d'indication correspondent à une première valeur, la première valeur indique que les informations de réponse de temps de réveil cible restreint comprennent les informations d'indication de la première catégorie d'accès; ou
lorsque les premières informations d'indication correspondent à une seconde valeur, la seconde valeur indique que les informations de réponse de temps de réveil cible restreint ne comprennent pas les informations d'indication de la première catégorie d'accès.

3. Procédé selon la revendication 1, dans lequel les informations de demande d'établissement de temps de réveil cible restreint comprennent des secondes informations d'indication; et
lorsque les secondes informations d'indication correspondent à une première valeur, la première valeur indique que les informations de demande d'établissement de temps de réveil cible restreint comprennent les informations d'indication de la première catégorie d'accès; ou
lorsque les secondes informations d'indication correspondent à une seconde valeur, la seconde valeur indique que les informations de demande d'établissement de temps de réveil cible restreint ne comprennent pas les informations d'indication de la première catégorie d'accès.

4. Procédé selon la revendication 1 ou 3, dans lequel lorsque les informations de demande d'établissement de temps de réveil cible restreint comprennent les informations d'indication de la première catégorie d'accès, les informations de réponse de temps de réveil cible restreint comprennent des troisièmes informations d'indication; et
lorsque les troisièmes informations d'indication correspondent à une première valeur, la première valeur indique que le point d'accès accepte les informations d'indication de la première catégorie d'accès; ou
lorsque les troisièmes informations d'indication correspondent à une seconde valeur, la seconde valeur indique que le point d'accès rejette les informations d'indication de la première catégorie d'accès.

5. Procédé selon la revendication 4, dans lequel la seconde valeur indique en outre que les informations de réponse de temps de réveil cible restreint comprennent en outre des informations d'indication d'une seconde catégorie d'accès correspondant au trafic à faible latence de la station.

6. Procédé selon la revendication 1 ou 3, dans lequel lorsque les informations de demande d'établissement de temps de réveil cible restreint comprennent les informations d'indication de la première catégorie d'accès, les informations de réponse de temps de réveil cible restreint comprennent des quatrièmes informations d'indication; et
lorsque les quatrièmes informations d'indication correspondent à une première valeur, la première valeur indique que le point d'accès accepte les informations d'indication de la première catégorie d'accès; ou
lorsque les quatrièmes informations d'indication correspondent à une seconde valeur, la seconde valeur indique que le point d'accès rejette les informations d'indication de la première catégorie d'accès; ou
lorsque les quatrièmes informations d'indication correspondent à une troisième valeur, la troisième valeur indique que les informations de réponse de temps de réveil cible restreint comprennent en outre des informations d'indication d'une troisième catégorie d'accès correspondant au trafic à faible latence de la station.

7. Procédé de transmission de données, comprenant :
l'envoi, par une station, d'informations de demande d'établissement de temps de réveil cible restreint à un point d'accès, dans lequel les informations de demande d'établissement de temps de réveil cible restreint sont utilisées pour demander d'établir un temps de réveil cible restreint; et
la réception, par la station, d'informations de réponse de temps de réveil cible restreint envoyées par le point d'accès, dans lequel les informations de réponse de temps de réveil cible restreint sont utilisées pour répondre aux informations de demande d'établissement de temps de réveil cible restreint, dans lequel
les informations de demande d'établissement de temps de réveil cible restreint ou les informations de réponse de temps de réveil cible restreint comprennent des informations d'indication d'une première catégorie d'accès correspondant à un trafic à faible latence de la station, et les informations d'indication de la première catégorie d'accès correspondent à une valeur d'indice de catégorie d'accès ou un bitmap.

8. Procédé selon la revendication 7, dans lequel les informations de réponse de temps de réveil cible restreint comprennent des premières informations d'indication; et
lorsque les premières informations d'indication correspondent à une première valeur, la première valeur indique que les informations de réponse de temps de réveil cible restreint comprennent les informations d'indication de la première catégorie d'accès; ou
lorsque les premières informations d'indication correspondent à une seconde valeur, la seconde valeur indique que les informations de réponse de temps de réveil cible restreint ne comprennent pas les informations d'indication de la première catégorie d'accès.

9. Procédé selon la revendication 7, dans lequel les informations de demande d'établissement de temps de réveil cible restreint comprennent des secondes informations d'indication; et
lorsque les secondes informations d'indication correspondent à une première valeur, la première valeur indique que les informations de demande d'établissement de temps de réveil cible restreint comprennent les informations d'indication de la première catégorie d'accès; ou
lorsque les secondes informations d'indication correspondent à une seconde valeur, la seconde valeur indique que les informations de demande d'établissement de temps de réveil cible restreint ne comprennent pas les informations d'indication de la première catégorie d'accès.

10. Procédé selon la revendication 7 ou 9, dans lequel lorsque les informations de demande d'établissement de temps de réveil cible restreint comprennent les informations d'indication de la première catégorie d'accès, les informations de réponse de temps de réveil cible restreint comprennent des troisièmes informations d'indication; et
lorsque les troisièmes informations d'indication correspondent à une première valeur, la première valeur indique que le point d'accès accepte les informations d'indication de la première catégorie d'accès; ou
lorsque les troisièmes informations d'indication correspondent à une seconde valeur, la seconde valeur indique que le point d'accès rejette les informations d'indication de la première catégorie d'accès.

11. Procédé selon la revendication 10, dans lequel la seconde valeur indique en outre que les informations de réponse de temps de réveil cible restreint comprennent en outre des informations d'indication d'une seconde catégorie d'accès correspondant au trafic à faible latence de la station.

12. Procédé selon la revendication 7 ou 9, dans lequel lorsque les informations de demande d'établissement de temps de réveil cible restreint comprennent les informations d'indication de la première catégorie d'accès, les informations de réponse de temps de réveil cible restreint comprennent des quatrièmes informations d'indication; et
lorsque les quatrièmes informations d'indication correspondent à une première valeur, la première valeur indique que le point d'accès accepte les informations d'indication de la première catégorie d'accès; ou
lorsque les quatrièmes informations d'indication correspondent à une seconde valeur, la seconde valeur indique que le point d'accès rejette les informations d'indication de la première catégorie d'accès; ou
lorsque les quatrièmes informations d'indication correspondent à une troisième valeur, la troisième valeur indique que les informations de réponse de temps de réveil cible restreint comprennent en outre des informations d'indication d'une troisième catégorie d'accès correspondant au trafic à faible latence de la station.

13. Dispositif de communication (900), comprenant une interface de communication (903) et un processeur (901), dans lequel le processeur (901) est configuré pour exécuter un programme informatique ou des instructions, de sorte que le dispositif de communication (900) réalise le procédé selon l'une quelconque des revendications 1 à 12.

14. Support de stockage lisible par ordinateur, comprenant un programme informatique ou des instructions, dans lequel lorsque le programme informatique ou les instructions sont exécutés sur un ordinateur, l'ordinateur est configuré pour réaliser le procédé selon l'une quelconque des revendications 1 à 12.

15. Produit de programme informatique, comprenant des instructions, dans lequel lorsque les instructions sont exécutées sur un ordinateur, l'ordinateur est configuré pour réaliser le procédé selon l'une quelconque des revendications 1 à 12.
